Europäisches Patentamt

European Patent Office

Office européen des brevets

(19)

(11) Publication number : **0 528 570 A2**

# (12) EUROPEAN PATENT APPLICATION

(21) Application number : **92307033.8**

(22) Date of filing : **31.07.92**

(51) Int. Cl.[5] : **G06F 9/445**

(30) Priority : **16.08.91 US 746390**

(43) Date of publication of application :
**24.02.93 Bulletin 93/08**

(84) Designated Contracting States :
**DE FR GB**

(71) Applicant : **International Business Machines
Corporation
Old Orchard Road
Armonk, N.Y. 10504 (US)**

(72) Inventor : **Hochmuth, Gary John
6787 Moselle Drive
San Jose, California 95119 (US)**

(74) Representative : **Blakemore, Frederick
Norman
IBM United Kingdom Limited Intellectual
Property Department Hursley Park
Winchester Hampshire SO21 2JN (GB)**

(54) **Outputting messages in a data processing system.**

(57)  In a data processing system messages are
output from a plurality message sets, there
being a plurality of languages in which mes-
sages can be output. A Message Library Table
14 is created and stored for each set of mes-
sages. This table contains a list of languages 12
used in the set and addresses of associated
Message Identifier Tables 13. The Message
Identifier Table contains the Message Set Des-
criptors 21, 22 identifying the subset of messages which are contained in a particular load
module 23. Use of the Message Library Tables
occurs when an executing program issues a
request 31 to a message service means specify-
ing a Message Library Table 32 and a message
identifier 33. The service means reads information stored in the system indicating the setting of the current language and uses this
information to search the previously created
Message Library Table specified in the message
request to obtain the message requested for
output.

FIG. 4

EP 0 528 570 A2

The present invention relates to the output of messages in a data processing system, the messages being stored in a plurality of load modules.

It is common for software programs to have a large number of messages which are needed to cover all of the error conditions, warnings, and informational needs in a computerized data processing system. A typical example is a compiler for a mainframe computer which may have hundreds of different messages which may be required to be displayed. In addition each message may have multiple versions in different languages and character sets. The messages may have French, Japanese, and English language versions, for example, but there may also be different character sets inside a single language. For example, some compilers have an option which allows the messages to be printed in all uppercase characters or in mixed upper and lower case characters. One way of implementing these case differences is to create one message text using all uppercase characters. In the following description the term language will be used to include human languages (also generally called national languages) and also character set variations, since they are treated in exactly the same way. All of the messages associated with a single program will be referred to as a message set.

Thus, a single program such as a compiler may have many messages and in the computing system there will be many programs which will each have a unique message set. The system or message server must manage a multiplicity of these message sets. In the prior art these multiple message sets are managed in an inflexible "ad hoc" way. Messages are compiled or assembled to form load modules which contain the message text, codes indicating where dynamic inserts should be placed, and an index of the starting points of each message. The load modules are typically stored on non-volatile memory devices such as direct access storage devices (DASD). "Loading" a load module is a procedure well known in the prior art wherein the data stored on DASD is copied into the random access memory (RAM) of the system and certain adjustments are made where required based on the exact location in the RAM where the data is placed. Prior art allows for each load module to contain a subset of messages according to a fixed predetermined scheme. For example, a load module file named "ECOBOL500" might be used to hold the English messages numbered 1 through 500 for the COBOL compiler. When the system is required to output an English message number 37 requested by the COBOL compiler, it would have to have "a priori" knowledge of the file naming scheme to know to look in the load module named "ECOBOL500". This scheme does not allow for the easy addition of new languages, changing the number of messages contained in a single load module or changing the message identification scheme by changing the numbering scheme.

Under the prior art system when there are multiple message sets, it is possible for conflicts to develop in file naming schemes between different compilers or other programs operating on the system.

Present computer systems having multiple language capability must have a way of communicating which particular language has been selected for current use. This selection can be made when the system is installed, it can be a default language or it can be a user selected language. However determined the system must store information which identifies a particular language as the current language to be used for messages.

Accordingly, the invention provides a method for outputting a message in a data processing system having a plurality of message sets stored in load modules and a selected current language, said method comprising the steps of:

maintaining a Message Library Table containing a list of languages and addresses of associated Message Identifier Tables, whereby each Message Identifier Table contains a list of message set descriptors, each identifying an associated load module;

receiving a message request specifying a Message Library Table and a message identifier;

searching the Message Library Table for the selected current language and retrieving the address of the associated Message Identifier Table;

searching the associated Message Identifier Table by comparing the message identifier with the message set descriptors to identify an associated load module;

loading the associated load module;

finding in the associated load module the address of the message text corresponding to the message identifier; and

outputting the message text corresponding to the message identifier.

This allows the system to manage an arbitrary number of message sets in any number of languages without "a priori" knowledge as to the number of languages used, load module naming schemes or the number of messages assigned to each load module. In a preferred embodiment the message identifier is a number, and the message set descriptors are a low and high message number.

Preferably the message request specifies the Message Library Table by a string of characters which uniquely identify a file name containing the Message Library Table. It is also preferred that the step of searching the Message Library Table further comprises the step of selecting a default language for use after detecting that the Message Library Table does not contain an entry for the current language.

The invention also provides a method for forming a Message Library Table in a data processing system having a plurality of message sets stored in load modules, comprising the steps of:

determining a message set descriptor and a language for the messages stored in each load module;

forming, for each language and character set, a Message Identifier Table which contains the message set descriptors and the names of the associated load modules;

forming a list of the addresses of each Message Identifier Table and its associated language; and

storing the list and the Message Identifier Table on a non-volatile memory device.

Preferably the method further comprises the step of assembling or compiling a source code file to generate a load module containing the Message Library Table.

The invention further provides a data processing system having a plurality of message sets stored in load modules and a selected current language, and further having means for outputting a message from a load module comprising:

a Message Library Table containing a list of languages and addresses of associated Message Identifier Tables, whereby each Message Identifier Table contains a list of message set descriptors, each identifying an associated load module;

means for receiving a message request specifying a Message Library Table and a message identifier;

means for searching the Message Library Table for the selected current language and retrieving the address of the associated Message Identifier Table;

means for searching the associated Message Identifier Table by comparing the message identifier with the message set descriptors to identify an associated load module;

means for loading the associated load module;

means for finding in the associated load module the address of the message text corresponding to the message identifier; and

means for outputting the message text corresponding to the message identifier.

Thus a data processing system can output messages from a plurality message sets, there being a plurality of languages in which messages can be output. To prepare for outputting the messages, a Message Library Table is created for each set of messages and stored on non-volatile storage. This table contains a list of languages used in the set and addresses of associated Message Identifier Tables. The Message Identifier Table contains information (the Message Set Descriptor) identifying the subset of messages which are contained in a particular load module. The messages are stored in load modules according to prior practice. Use of the Message Library Tables occurs when an executing program issues a request to a service means which will actually output the message. The message request specifies a Message Library Table and a message identifier. The service means reads information stored in the system indicating the setting of the current language and uses this information to search the previously created Message Library Table specified in the message request. Finding the appropriate language entry in the table identifies a corresponding Message Identifier Table. The Message Identifier Table is then searched using the message identifier contained in the message request to identify the particular load module which contains the message. Once identified the message in the load module is output using standard techniques. The output may be displayed on a CRT, a printer, or placed in a disk file.

An embodiment of the invention will now be described by way of example with reference to the following drawings:

Figure 1 shows the high level structure of a Message library Table.

Figure 2 shows a more detailed structure of a Message Library Table.

Figure 3 shows the structure of an entry in a Message Identifier Table.

Figure 4 is an overview of the inputs and outputs for a Message Server using Message Library Tables.

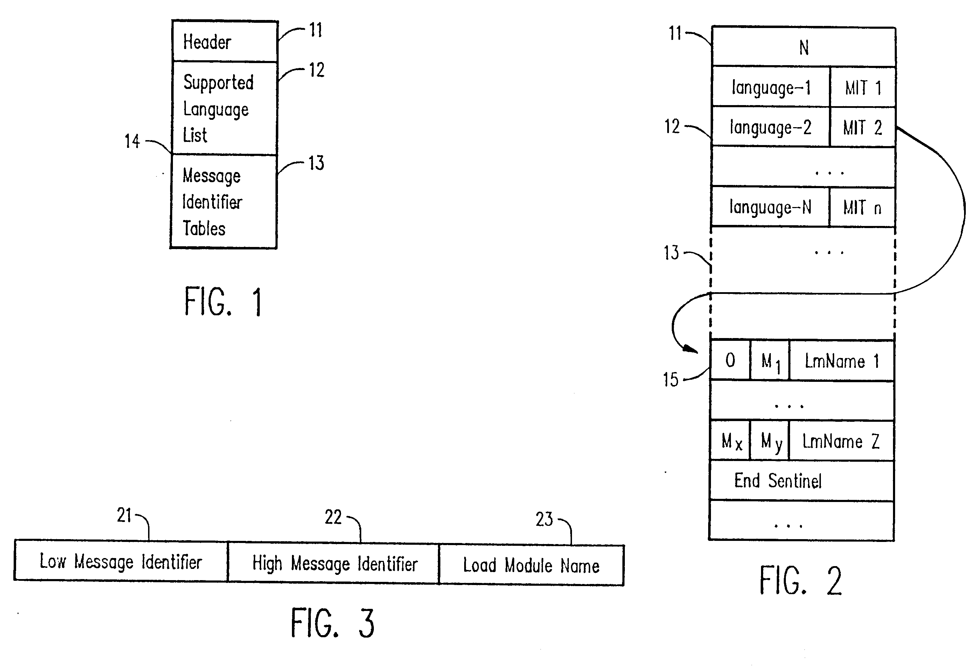

Each Message Library Table (MLT) is created as a single load module and stored on DASD. When used the MLT is loaded into the memory of the computer (RAM) according to existing relocating loader techniques. Reference is made to Figure 1 to illustrate the structure of a Message Library Table 14. An MLT consists of three logical sections which are:

1. Header 11

2. Supported Languages List (SLL) 12

3. Message Identifier Tables (MIT) 13

Further detail of the MLT is illustrated in Figure 2. The header 11 contains the total number of language entries which in Figure 2 is shown as N. Since there is a one-to-one relationship between the Supported Languages entries and the number of Message Identifier Tables (MITs) this is also the number of Message Identifier Tables. Each MIT may contain entries for a number of load modules; therefore, the number of load modules may exceed the number of MITs.

The SLL 12 is illustrated in Figure 2. For every supported national language or character set, two pieces of information are provided as an ordered pair in the SLL.

1. The Name of the Language
2. A pointer into the Message Identifier Table

In the preferred embodiment a language is actually designated by the first three characters of an eight character field. The other five characters may be left blank. Thus, "ENGLISH" could be represented as "ENG" or any other unique three characters. In the actual implementation "ENU" is used for "USA English". A set of standard codes for the languages must be used for uniformity. The five unused characters are there simply to preserve boundary alignment. The way that languages are represented in the SLL is not critical and any unique set of codes will work. For example, coding schemes using any number of bytes could easily be devised. It will be most efficient to use the same method for encoding languages as is used by the operating system in which the MLT will be used, since the codes for the currently selected language will be provided by the operating system. In Figure 2 the list of languages is shown using arbitrary names "language-1", etc. The pointers to the MITs are shown as "MIT1", etc. As will be shown below this is intended to represent the starting address of the corresponding MIT. This starting address will preferably be a binary number directly usable by the computer which will either be the offset or absolute address in the MLT where the first entry in the corresponding MIT will be found. This is illustrated in Figure 2 by showing graphically that "MIT2" points downward in the MLT to an entry 15 in the MIT section.

The first language in the list of supported national languages is called the primary language. This language will be used if the Message Library Table does not contain the current language setting. For example, if the Message Library Table does not contain JAPANESE and the current language setting is JAPANESE, then the primary language will be used.

The exact content of the MLT differs for each message set. Thus, for example, the system's COBOL compiler may support messages in English, Italian, and Japanese while the FORTRAN compiler provides English and German. It is an advantage of the invention that the message server need not have "a priori" knowledge of which requesting programs support which languages. The message server dynamically determines if the currently selected language is supported in a particular message set by reading the MLT.

In Figure 3 a single MIT entry is illustrated as having three parts. The Low Message Identifier 21 is coded representation of the lowest message identifier value contained in the load module whose name is listed in the last part of the entry 23. The High Message Identifier 22 is coded representation of the highest message identifier value contained in the load module. The Low and High Message Identifiers make up the Message Set Descriptor which fully identifies the messages contained in the load module. Use of the comparative terms highest and lowest imply that the message identifiers have a collating sequence. Although numerical representations are used in the preferred embodiment for the Low and High Message Identifiers, alphabetic and alphanumeric representations will also work. In fact, any representation scheme which allows the contents of the load module to be ascertained will work.

Each MIT entry in the preferred embodiment consists of sixteen bytes. The first four bytes contains the lowest message number within the load module and the second four bytes contains the highest message number within the load module. The last 8 bytes contain the name of the load module in character form. The first two fullwords (four bytes in a fullword) of the last entry contain a sentinel value of minus one (-1) to indicate the end of the MIT. Any code can be used as the end marker as long as it cannot be confused with a valid entry.

The following is an IBM mainframe assembly language example of a simple MLT:

```
NATIONAL CSECT
NATIONAL AMODE ANY
NATIONAL RMODE ANY
*   Header
        DC   F'2'                 Number of languages in table
*   SLL
        DC   CL8'ENU'             Codes for English USA
        DC   A(TABLE_ENU)         Pointer to MIT for English USA
        DC   CL8'JPN'             Codes for Japanese
        DC   A(TABLE_JPN)         Pointer to MIT for Japanese
*
*   Start of Message Identifier Tables
*
*   Table for English USA
*
TABLE_ENU DS OD                   Reserve Storage
        DC   F'0000'              Low message number
```

```
          DC    F'0399'              High message number
          DC    CL8'IBM0MLSA'        Load Module Name
          DC    F'0400'              Low message number
          DC    F'2000'              High message number
          DC    CL8'IBM0LM2A'        Load Module Name
          DC    F'-1'                Sentinel value
          DC    F'-1'                Sentinel value
          DC    CL8'DUMMY'           Arbitrary Fill
     *

     *  Table for Japanese

     *

TABLE_JPN DS    0D                   Reserve Storage
          DC    F'0000'              Low message number
          DC    F'0500'              High message number
          DC    CL8'IBM0MLSN'        Load Module Name
          DC    F'0501'              Low message number
          DC    F'2000'              High message number
          DC    CL8'IBM0LM2N'        Load Module Name
          DC    F'-1'                Sentinel value
          DC    F'-1'                Sentinel value
          DC    CL8'DUMMY'           Arbitrary Fill
          END
```

An MLT is prepared by creating source code, as in the preceding example, following the rules given above and processing the code by standard techniques to create a load module. Any convenient computer programming language may be used. The information which goes into the MLT must be derived from the particular message set for which the MLT is being built. The person or program building the MLT must know how many languages are supported in the message set and what range of messages are contained in each load module. Typically the load modules will be prepared first, then the MLT will be built.

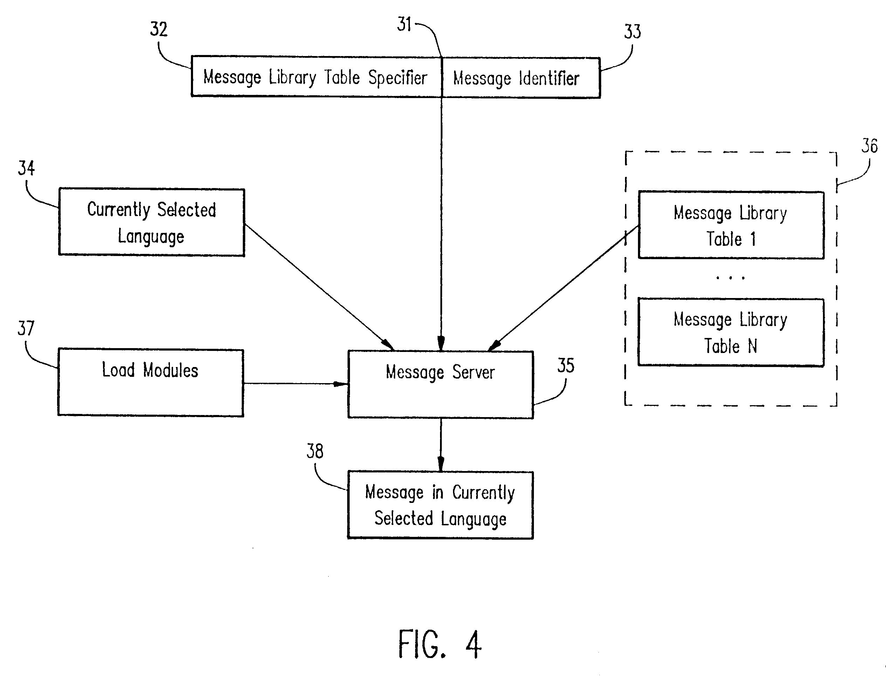

The process of using the MLT is illustrated using Figure 4. A Requestor, which can be any program or means for which an MLT has previously been created, sends a Message Request 31 to a Message Server 35. This Request can be sent by any means through which Servers and other programs or means communicate in the computer system. Methods for communicating this type of information through system calls (SVCs) or software interrupts, etc. are well known in the art. The Message Request contains two pieces of information: the Message Library Table Specifier 32 (which must uniquely identify an MLT) and the Message Identifier 33. The Message Server requires an additional piece of information, the currently selected language 34 in order to be able use the Message Identifier to uniquely identify a message text. The Message Server finds the specified MLT from among the plurality of MLTs which have been defined 36. Using the currently selected language information 34 which the Server has obtained from the operating system, the Server searches the Supported languages List (SLL) to find a match. The total number of entries in the SLL is recorded in the Header and is used to decide when all of the SLL entries have been searched in the event that no match is found.

When the entry in the SLL has been found for the current language (or the primary language is used for the default) the MIT address which immediately follows the characters which define the language is used to find the first entry in the MIT for that language. (See Figure 2, element 15). The Message Server reads each entry in the MIT and compares the Message Identifier in the Message Request (MRMI) with the Low Message Identifier until an entry is found with a Low Message Identifier which is greater than or equal to the MRMI and a High Message Identifier which is greater than or equal to the MRMI. If the sentinel value (-1) is reached, then the MRMI is not defined for the specified MLT and an error condition arises. Normal error handling procedures can be used in this event.

Once the MRMI has been determined to be in the range of the Low and High Message Identifier pair, the name of the corresponding load module is found in the characters immediately following. The named load module can be processed using prior art techniques. Typically the load module will have a header containing a pointer to an index of message starting addresses which allows the server to quickly find the message text inside the module. After the text is located the dynamic insertions are performed and the final text is output to a display, printer or storage.

By way of example, assume that the sample assembly language code given above has been assembled and processed to form a load module named "ICOBMSGT" which is used for the COBOL compiler. Compilers can generate two categories of messages, i.e., run-time messages and compile-time messages. The system of the invention can be used for both categories. When the COBOL compiler requires that message number 454 be output, it sends a message request to the Message Server with "COB" as the MLT specifier and 454 as the Message Identifier. In this case "COB" is sufficient to specify the correct MLT because all of the MLT modules have a standard prefix and suffix illustrated here as "I" and "MSGT". The "I" prefix is used for load modules prepared as a part of the system software and "U" is used for modules prepared by users. Thus, the MLT specifier need not be the actual load module name, but merely sufficient information to uniquely specify the MLT load module given any conventions established for file names, etc. The Message Server must inquire to the system to determine the current language setting. Assume that the system returns "JPN" as the code for the language. The Message Server will load the TCOBMSGT module into memory and determine that there are two supported languages by reading the header, the first four bytes in the memory image. The SLL starts at the fifth byte. The Message Server will compare the current language codes with "ENU" which are the characters for the first languauge and since no match is found, it will add 12 bytes to its offset address and compare the next language entry. This time the codes match ("JPN" = "JPN") and the address of the MIT is found in the following word which is simply indicated here as A(Table_JPN). Searching through the entries in Table_JPN for a low and high range which covers message number 454 reveals that the first listed entry applies since the low message number is 0 and the high is 500. Therefore, the load module name is determined to be "IBMOMLSN". The module "IBMOMLSN" will then be loaded and the message text for message number 454 output.

In the preferred embodiment a Message Server is created to service all or some of the compilers and run-time support programs used in a computing system. Each high level language compiler has an associated MLT which it specifies in the Message Request which it sends to the Message Server. The Message Server is preferably a program executing on a general purpose computer, but may also be a hardware means created using firmware techniques and other well known techniques for creating hardware that is functionally equivalent to a general purpose computer running a particular program. Using the foregoing specifications computer program(s) may be implemented using standard programming techniques. The resulting program(s) may be stored on disk, diskettes, memory cards, ROM or any other memory device. For execution the program may be copied into the RAM of the computer.

## Claims

1. A method for outputting a message in a data processing system having a plurality of message sets stored in load modules and a selected current language (34), said method comprising the steps of:

maintaining a Message Library Table (14) containing a list of languages (12) and addresses of associated Message Identifier Tables (13), whereby each Message Identifier Table contains a list of message set descriptors (21,22), each identifying an associated load module (23);

receiving a message request (31) specifying a Message Library Table (32) and a message identifier (33);

searching the Message Librasy Table for the selected current language and retrieving the address of the associated Message Identifier Table;

searching the associated Message Identifier Table by comparing the message identifies with the message set descriptors to identify an associated load module;

loading the associated load module;

finding in the associated load module the address of the message text corresponding to the message identifier; and

outputting (38) the message text corresponding to the message identifier.

2. The method of claim 1 wherein the message identifier is a number.

3. The method of claim 2 wherein the message set descriptors are a low and high message number.

4. The method of any preceding claim wherein the message request specifies the Message Librasy Table by a string of characters which uniquely identify a file name containing the Message Librasy Table.

5. The method of any preceding claim, wherein the step of searching the Message Library Table further comprises the step of selecting a default language for use after detecting that the Message Library Table does not contain an entry for the current language.

6. A method for forming a Message Library Table (14) in a data processing system having a plurality of message sets stored in load modules, comprising the steps of:
   determining a message set descriptor (21, 22) and a language for the messages stored in each load module;
   forming, for each language and character set, a Message Identifier Table (13) which contains the message set descriptors and the names of the associated load modules;
   forming a list of the addresses of each Message Identifier Table and its associated language (12); and
   storing the list and the Message Identifier Table on a non-volatile memory device.

7. The method of claim 6, futher comprising the step of assembling or compiling a source code file to generate a load module containing the Message Librasy Table.

8. A data processing system having a plurality of message sets stored in load modules and a selected current language (34), and further having means for outputting a message from a load module comprising:
   a Message Library Table (14) containing a list of languages (12) and addresses of associated Message Identifier Tables (13), whereby each Message Identifier Table contains a list of message set descriptors (21, 22), each identifying an associated load module (23);
   means for receiving a message request (31) specifying a Message Library Table (32) and a message identifier (33);
   means for searching the Message Library Table for the selected current language and retrieving the address of the associated Message Identifier Table;
   means for searching the associated Message Identifier Table by comparing the message identifier with the message set descriptors to identify an associated load module;
   means for loading the associated load module;
   means for finding in the associated load module the address of the message text corresponding to the message identifier; and
   means for outputting the message text corresponding to the message identifier.

9. The system of claim 8 further comprising:
   means for detecting that the Message Library Table does not contain an entry for the current language; and
   means responsive to the detecting means for selecting a default language.

FIG. 1

| Header | 11 |
| Supported Language List | 12 |
| Message Identifier Tables | 13 |

14

FIG. 2

| N | |
|---|---|
| language-1 | MIT 1 |
| language-2 | MIT 2 |
| . . . | |
| language-N | MIT n |

11
12
13

. . .

| 0 | $M_1$ | LmName 1 |
| . . . | | |
| $M_x$ | $M_y$ | LmName Z |
| End Sentinel | | |
| . . . | | |

15

FIG. 3

| Low Message Identifier | High Message Identifier | Load Module Name |
|---|---|---|

21    22    23

EP 0 528 570 A2

9

32    31    33

Message Library Table Specifier | Message Identifier

34

Currently Selected Language

36

Message Library Table 1

. . .

Message Library Table N

37

Load Modules

Message Server    35

38

Message in Currently Selected Language

FIG. 4